# EUROPEAN PATENT SPECIFICATION

(11) **EP 2 468 059 B1**
(45) Date of publication and mention of the grant of the patent: **20.11.2013**
(21) Application number: 10738092.5
(22) Date of filing: 22.07.2010
(51) Int. Cl.: H04W 74/00, H04W 74/08

(54) **ACKNOWLEDGMENT OF UPLINK TRANSMISSION ON CONTENTION BASED RESOURCE IN WIRELESS COMMUNICATION SYSTEM**
BESTÄTIGUNG EINER UPLINK-ÜBERTRAGUNG ÜBER EINE KONFLIKTBASIERTE RESSOURCE IN EINEM DRAHTLOSEN KOMMUNIKATIONSSYSTEM
ACQUITTEMENT D'UNE TRANSMISSION DE LIAISON MONTANTE SUR UNE RESSOURCE BASÉE SUR UNE CONTENTION DANS UN SYSTÈME DE COMMUNICATION SANS FIL

(30) Priority: 21.08.2009 US 545463
(43) Date of publication of application: 27.06.2012
(73) Proprietor: Motorola Mobility LLC, Libertyville, IL 60048 (US)
(72) Inventor: NARASIMHA, Murali, Lake Zurich Illinois 60047 (US); KUCHIBHOTLA, Ravi, Gurnee Illinois 60031 (US)
(74) Representative: Openshaw, Paul Malcolm
(86) International application number: PCT/US2010/042826
(87) International publication number: WO 2011/022160

(56) References cited:
- ERICSSON ET AL: "Contention based uplink transmissions", 3GPP DRAFT; R2-093812_CONTENTION_BASED_UPLINK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090623, 23 June 2009 (2009-06-23), XP050352029, [retrieved on 2009-06-23] cited in the application
- ERICSSON ET AL: "Latency improvement comparison", 3GPP DRAFT; R2-094825 (LATENCY IMPROVEMENTS COMPARISON), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), XP050352833, [retrieved on 2009-08-18]

## Description

### FIELD OF THE DISCLOSURE

The present disclosure relates generally to wireless communications and more particularly to acknowledgment by a base station of an uplink transmission by a wireless communication terminal on contention based uplink resource in a wireless communication system.

### BACKGROUND

In 3GPP RAN2, a contribution by Ericsson entitled "Contention Based Uplink Transmission" (R2-093812) discloses a base unit, also referred to as eNode B (eNB), that grants a contention based uplink resource on which remote units may transmit. Such an uplink channel allows a remote unit, also referred to as user equipment (UE), to transmit small packets (e.g., transmission control protocol (TCP) acknowledgements) to the base unit without sending a scheduling request and without receiving a dedicated uplink resource. The small packets may be embodied for example, as transmission control protocol (TCP) acknowledgements. The use of such contention based uplink resources reduces both latency and signaling overhead. It can also reduce time spent in the "start up phase" of TCP. According to R2-093812, the contention based resources are made available by the eNB only when there are resources that are not used for the conventional grants, e.g., dedicated uplink resource grants. Since more than one UE can utilize a particular contention based uplink resource, it is necessary to uniquely identify the UE using the contention based resource. To identify the UE, it is known to include an identifier, e.g., cell radio network temporary identifier (C-RNTI), of the UE in the transmission on the contention based uplink resource. Moreover, when a UE transmits a TCP acknowledgement using a contention based grant, it is necessary for the eNB to acknowledge the transmission if it is received correctly. R2-093812 however does not describe how such a transmission is acknowledged by the eNB.

The various aspects, features and advantages of the disclosure will become more fully apparent to those having ordinary skill in the art upon a careful consideration of the following Detailed Description thereof with the accompanying drawings described below. The drawings may have been simplified for clarity and are not necessarily drawn to scale.

### BRIEF DESCRIPTION OF THE DRAWINGS

FIG. 1 illustrates a wireless communication system.

FIG. 2 is a schematic block diagram of a wireless communication entity.

FIG. 3 is a process flow diagram from the perspective of a base unit.

FIG. 4 is a process flow diagram from the perspective of a remote unit.

FIG. 5 illustrates a radio frame having a offset downlink resource.

### DETAILED DESCRIPTION

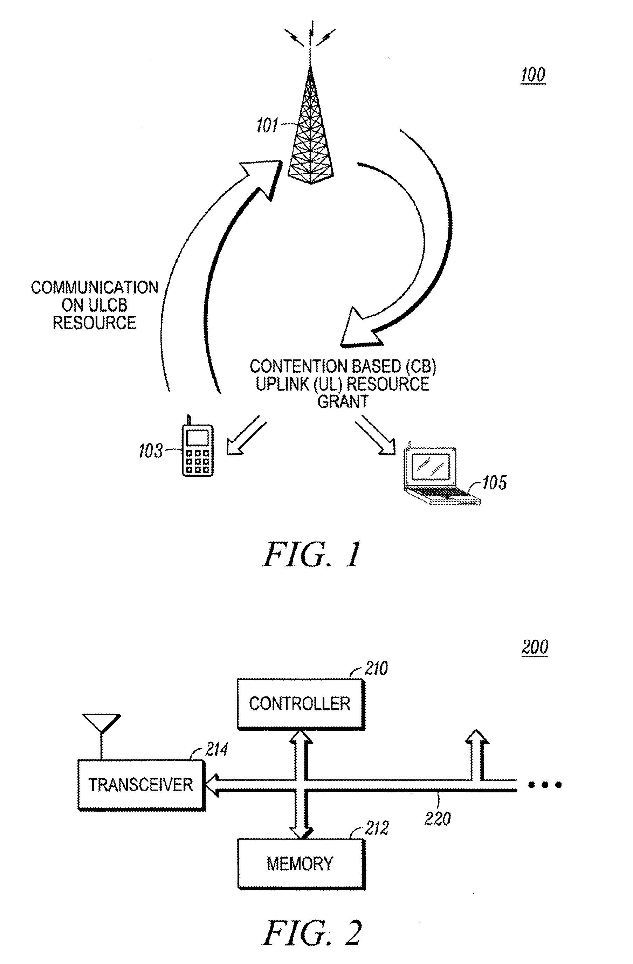

In FIG. 1, a wireless communication system 100 comprises one or more fixed base infrastructure entities 101 forming a network distributed over a geographical region for serving remote units in the time and/or frequency and/ or spatial domain. A base unit may also be referred to as an access point, access terminal, base, base station, Node-B (NB), eNode-B (eNB), Home Node-B (HNB), Home eNode-B (HeNB), relay node (RN), or by other terminology used in the art. Each base unit comprises one or more transmitters for sending downlink transmissions and one or more receivers for receiving uplink transmissions. The base units are generally part of a radio access network that may include one or more controllers communicably coupled to one or more corresponding base units. The access network is generally communicably coupled to one or more core networks, which may be coupled to other networks like the Internet and public switched telephone networks (PSTNs) among other entities. These and other elements of access networks and core networks are not illustrated but are known generally by those having ordinary skill in the pertinent art.

In FIG. 1, the one or more base units each serve a number of remote units 103, 105 within a corresponding serving area, for example, a cell or a cell sector, via a wireless communication link. The remote units may be fixed or mobile. The remote units may also be referred to as subscriber units or stations, mobiles, mobile stations, users, terminals, user equipment (UE), user terminals, wireless communication devices, or by other terminology used in the art. Each remote unit also comprises one or more transmitters and one or more receivers. The base unit generally transmits downlink communications to serve the remote units in the time and/or frequency and/or code domain. The remote units communicate with base units via uplink communication signals. A base unit may be a "serving" base unit or a "non-serving" base unit relative to the a particular remote unit. Communications between a remote unit and a serving base unit are generally two-way communications. Communications between remote unit and a non-serving base unit are generally one-way comnmnications wherein the remote unit monitors transmissions from the base unit. A remote unit may also communicate with abase unit via a relay node.

In one implementation, the wireless communication system is compliant with the 3GPP Universal Mobile Telecommunications System (UMTS) protocol. In another implementation, the wireless communication system is compliant with the 3GPP Universal Mobile Telecommunications System (UMTS) LTE protocol, also referred to as EUTRA or some later generation thereof, wherein the base units transmit using an orthogonal frequency division multiplexing (OFDM) modulation scheme on the downlink and the user terminals transmit using a single carrier frequency division multiple access (SC-FDMA) scheme on the uplink. In yet another implementation, the wireless communication system is compliant with the 3GPP Universal Mobile Telecommunications System (UMTS) LTE-Advanced protocol, also referred to as LTE-A or some later generation or release thereof, wherein the base unit transmits using an OFDM modulation scheme on a single or a plurality of downlink component carriers and the user terminals transmit on the uplink using a single or plurality of uplink component carriers. More generally the wireless communication system may implement some other open or proprietary communication protocol, for example, the WiMAX protocol, among other existing and future protocols. The architecture may also include the use of spreading techniques such as multi-carrier CDMA (MC-CDMA), multi-carrier direct sequence CDMA (MC-DS-CDMA), Orthogonal Frequency and Code Division Multiplexing (OFCDM) with one or two dimensional spreading. The architecture in which the features of the instant disclosure are implemented may also be based on less complex time and/or frequency division multiplexing/multiple access techniques, or a combination of these various techniques. In alternative embodiments, the wireless communication system may utilize other comnmnication system protocols including, but not limited to, TDMA or direct sequence CDMA. The communication system may be a TDD (Time Division Duplex) or FDD (Frequency Division Duplex) system. The implementation of the present disclosure however is not intended to be limited to any particular wireless communication system architecture or protocol.

In FIG. 2, the wireless communication entity 200 comprises a controller 210 coupled to memory 212 and to a transceiver 214 via a system bus 220. The wireless comnmnication entity 200 may be implemented as a base unit or a remote unit and includes additional elements depending on the particular implementation. For example, in remote unit embodiments, the wireless communication entity 200 would likely include user interface elements like a keypad and a display, not shown but well known to those having ordinary skill in the art. The wireless communication entity is generally compliant with the same wireless communication protocol as the base units with which it communicates, for example, the 3GPP LTE Rel-8 or later generation protocol discussed above. The controller is readily implemented as a digitally programmable processor that executes software or firmware based instructions stored in memory. However, the functionality of the wireless communication terminal described herein may also be implemented on hardware equivalent circuits or a combination of software and hardware based circuit elements.

In FIG. 1, the base unit 101 generally allocates resources to the wireless communication terminals within its serving area for uplink and downlink communications. Dedicated radio resources are specific to a particular remote unit in response to a scheduling request. Contention based radio resources are available to all remote units served by the base unit. Contention based resources are generally granted in the absence of scheduling requests when resources are available, although in some implementations some resources may be permanently designated for allocation as contention based resources.

Since more than one remote unit can utilize a particular contention based uplink resource, it is necessary to uniquely identify the remote that transmits on a particular contention based resource. To uniquely identify a remote unit herein means to be able to distinguish the remote unit relative to other remote units served by the same base unit. To identify the remote unit for this purpose, information associated with the remote unit may be included in the transmission on the contention based uplink resource as discussed more fully below. It is also desirable in some instances for the base unit to acknowledge receipt of a transmission from a remote unit on a contention based resource. For example, when a remote unit communicates a transmission control protocol (TCP) acknowledgement, which is generally a 40-byte message, using a contention based uplink resource it is sometimes desirable or necessary for the base unit to acknowledge the transmission with one or more bits. The base unit acknowledgement indicates that the TCP acknowledgment was received correctly by the base unit. In other embodiments, it may be desirable for the base unit to acknowledge or respond to messages other than TCP acknowledgements transmitted by a remote unit on a contention based uplink resource. In another implementation, a remote unit may transmit a small message such as a text message or SMS message on a contention based resource. It is necessary for the base unit to acknowledge the transmission with one or more bits to indicate that the text message was received correctly by the base unit. In yet another example, a remote unit may transmit a "keep-alive" message on a contention based resource, wherein the keep-alive message indicates a status of the remote unit. Here too, it may be necessary for the base unit to acknowledge that the keep-alive message was correctly received by the base unit.

Since it is possible that more than one remote unit could transmit on a contention based resource at or near the same instant of time, an acknowledgement sent by the base unit could be misinterpreted by one or more remote units as an indication of a successful uplink communication absent some mechanism to associate the acknowledgement sent by the base unit with a particular remote unit. According to one aspect of the disclosure, an offset is used to determine a downlink resource on which the base unit transmits, and the remote unit receives, an acknowledgement or a response to a communication from the remote unit. The offset is based generally on information associated with the remote unit that communicated the message being acknowledged. These and other aspects of the disclosure are discussed more fully below.

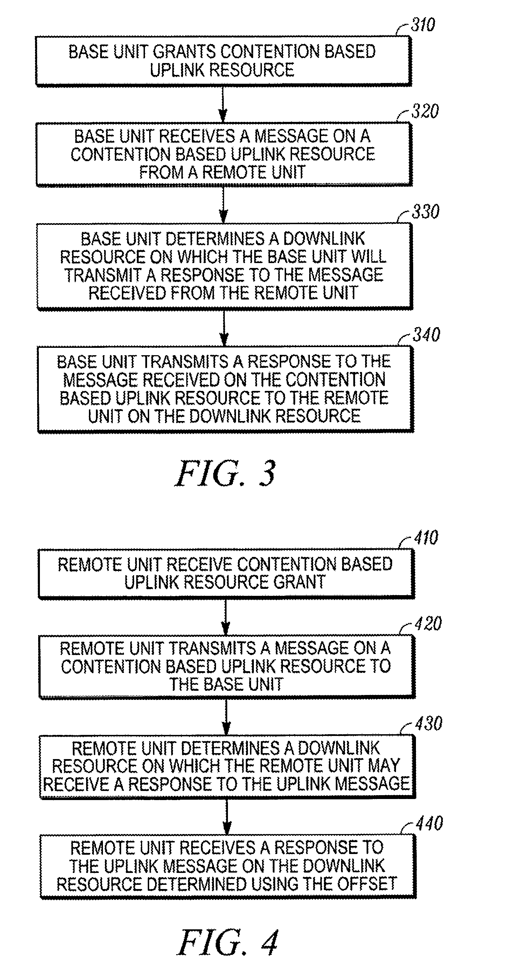

In FIG. 3, at 310, the base unit grants contention based uplink resources to remote units served by the base unit. In one implementation, the contention based resource is a physical uplink shared channel (PUSCH). Thus the controller of the base unit is configurable by software or firmware or equivalent hardware circuits generally to allocate resources to remote units served by the base unit. More particularly, the base unit controller is configured or configurable to allocate or grant contention based uplink resources to the remote units served by the base unit.

Contention based resource grants are received by all remote units served by the base unit and the contention based resources are thus available for use by all remote units. In FIG. 4, at 410, a remote unit receives a contention based resource grant. At 420, the remote unit transmits a message on a contention based uplink resource to the base unit. In some embodiments, the message originated from the remote unit includes information associated with the remote unit. In one particular implementation, the information associated with the remote unit is an identifier of the remote unit, for example, a cell radio network temporary identifier (C-RNTI) or some other identifier. In other implementations, the information associated with the remote unit is some other information permanently or temporarily associated with the remote unit. The information associated with the remote unit should enable the base unit to distinguish among the various remote units to which the contention based uplink resource was granted. Thus the identifier or other information is uniquely associated with the remote unit at least relative to other remote units that are currently served by the base unit granting the contention based uplink resource. In FIG. 3, at 320, a base unit receives, from a remote unit, a message on a contention based uplink resource. The message generally includes information associated with the remote unit, e.g., a permanent or temporary identifier of or for the remote unit, originating the message. The inclusion of an identifier in the message from the remote unit enables the base unit to determine the source or origination of the message transmitted on the contention based uplink resource.

As suggested, in some embodiments, the remote unit may transmit a message on a contention based resource without first scheduling transmission of the message with the base unit. Moreover, in some cases, the remote unit may request scheduling of a message on a contention free, i.e., a dedicated, uplink resource and also transmit the message on a contention based uplink resource. If transmission on the contention based resource is successful before a dedicated resource is scheduled, there is no need for the remote unit to transmit the message on the dedicated resource.

In FIG. 3, at 330, the base unit determines a downlink resource on which the base unit will transmit or send a response to the message received from the remote unit. The downlink resource is determined by applying an offset to a predetermined downlink resource. The resource may be a sub-frame or some other time-frequency radio resource. In one embodiment, the predetermined downlink resource is a resource that is known a priori by both the base unit and the remote unit. In one embodiment, the predetermined downlink resource is associated with the contention based uplink resource on which the message was sent by the remote unit. For the case of a TCP acknowledgement sent by the remote unit in a particular sub-frame, e.g., frame n-4, a physical hybrid automatic repeat request indicator channel (PHICH) in frame n is predetermined and known a priori by both the remote unit and the base unit. In one embodiment, the PHICH is determined based on the starting resource block of the contention based uplink resource used by the remote unit.

In other embodiments, there may be other instances where a downlink radio resource is pre-determined or pre-designated for responding to an uplink message. In one embodiment, the base unit responds in the downlink using a pre-determined radio resource wherein the pre-determined radio resource is part of the physical downlink control channel (PDCCH) region. The PDCCH in this embodiment then points to a data region in the sub-frame where a downlink message may be found, wherein the downlink message is in response to the uplink message. The PDCCH may point to a downlink radio resource on the same carrier or on a different carrier. In another embodiment, the pre-designated downlink radio resource is located within the data region of the sub-frame. In yet another embodiment, the downlink radio resource may be pre-designated in one of n sub-frames to provide some flexibility to the base unit when scheduling other remote units. The remote unit then attempts to decode the pre-designated radio resource in multiple downlink sub-frames. In another embodiment, the pre-designated downlink radio resource may be on another carrier that is known a priori by the remote unit or the remote unit may need to attempt to decode the pre-designated radio resource on multiple carriers known a priori to the remote unit.

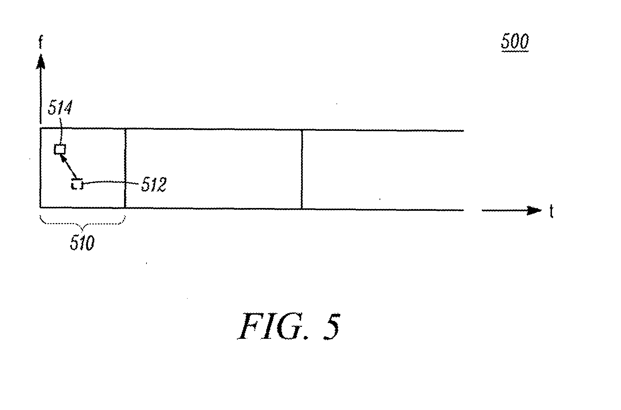

FIG. 5 illustrates a radio resource 500 in the time and frequency domain, but more generally the radio resource may be in any domain, for example, a time, frequency or code domain or a combination thereof. The exemplary radio resource is in the form of a sub-frame that includes a control region 510 with a predetermined downlink resource 512 for responding to a message sent on a contention based uplink resource. In the exemplary embodiment where the message on the contention based uplink resource is a TCP acknowledgment, the predetermined downlink resource is a physical hybrid automatic repeat request indicator channel (PHICH). According to this aspect of the disclosure, the predetermined downlink resource, e.g., a PHICH, is offset in the time or frequency domain based on the identifier of the remote unit that sent the message on the contention based resource. In some protocols, the PHICH is a 1-bit resource. More generally however the predetermined downlink resource may accommodate more than a single bit. In FIG. 5, the downlink resource 514 is offset relative to the predetermined downlink resource and thus the base unit will transmit the response or acknowledgement to the remote unit on the downlink resource 514. The controller of the base unit is configurable by software or firmware or equivalent hardware circuits generally to offset a predetermined resource based on information associated with the remote units that originated the message to which the base unit will respond or acknowledge.

Generally, the offset is based on the identifier associated with the wireless communication device that originated the message. In one implementation, the identifier of the remote unit is the identifier included in the message received by the base unit on the contention based uplink resource from the remote unit. As noted above, in one embodiment the identifier of the remote device is a CRNTI. In other embodiments other identifiers could be used. In a more particular implementation, the offset is determined as a function of the identifier of the wireless communication device. For example, the identifier could be subject to a Hash function wherein the resulting Hash value is the offset applied to the predetermined downlink resource to determine the downlink resource. Alternatively, the Hash value could be the basis for the offset. In another embodiment, a portion of the identifier, for example, the first or last few digits of the CRNTI, may be use to compute a decimal number that corresponds to the offset. The particular function or mechanism by which the base unit computes the offset based on the information associated with the remote unit that sends a message on the contention based uplink resource is relevant only to the extent that the base unit can compute an offset for the remote unit that differs from offsets computed for other remote units served by the base unit. Thus for any message received on the contention based uplink resource, the base unit can provide a response or acknowledgement uniquely associated with the remote unit that sent the message. The controller of the base unit is generally configurable by software or firmware or equivalent hardware circuits to determine the offset based on information associated with the remote unit to which the response or acknowledgement will be sent.

In FIG. 4, at 430, the remote unit also determines a downlink resource on which the wireless communication device may receive a response to the uplink message. The remote unit may or may not be sent a response to or acknowledgement of the message sent on the contention based uplink resource, depending on whether the uplink message was received correctly. Generally, the remote unit determines the downlink resource in the same manner as the base unit since the downlink resource determined by the remote unit and the base unit must be the same in order for the remote unit to receive the response or acknowledgement sent by the base unit. Particularly, the remote unit determines the downlink resource by applying an offset to the predetermined downlink resource wherein the offset is a function of the information associated with the remote unit. The identity associated with the remote unit and the function from which the offset is generated are both known a priori by both the remote unit and the base unit. The controller of the base unit is configurable by software or firmware or equivalent hardware circuits to determine the offset for a predetermined resource and the corresponding downlink resource based on information associated with the remote unit.

In FIG. 3, at 340, the base unit transmits a response to the message received on the contention based uplink resource to the remote unit on the downlink resource determined using the offset. In FIG. 4, at 440, the remote unit receives a response to the uplink message on the downlink resource determined using the offset.

While the present disclosure and the best modes thereof have been described in a manner establishing possession and enabling those of ordinary skill to make and use the same, it will be understood and appreciated that there are equivalents to the exemplary embodiments disclosed herein and that modifications and variations may be made thereto without departing from the scope of the inventions, which are to be limited not by the exemplary embodiments but by the appended claims.

## Claims

1. A method for a wireless communication device, the method comprising:
transmitting, from the wireless communication device, an uplink message including information associated with the wireless communication device; **characterized by**:
determining a downlink resource (430) on which the wireless communication device may receive a response to the uplink message, the downlink resource determined by applying an offset to a predetermined downlink resource,
the offset based on the information associated with the wireless communication device; and
receiving (440), at the wireless communication device, a response to the uplink message on the downlink resource.

2. The method of Claim 1 further comprising determining the offset as a function of the information associated with the wireless communication device, wherein the information is a remote unit identifier.

3. The method of Claim 1 further comprising determining the offset as a function of the information associated with the wireless communication device, wherein the information is a cell radio network temporary identification.

4. The method of Claim 1 further comprising
receiving a contention based uplink resource grant,
the uplink message being transmitted using the contention based uplink resource,
the received response acknowledging receipt of the uplink message.

5. The method of Claim 1 further comprising
receiving a contention based uplink resource grant,
transmitting the uplink message includes transmitting a TCP acknowledgement on the contention based uplink resource,
the response to the uplink message received on the downlink resource acknowledging receipt of the uplink message.

6. A wireless communication device comprising:
a transceiver (214);
a controller (210) coupled to the transceiver,
the controller (210) configured to cause the transceiver (214) to transmit a message on an uplink resource, the message including information associated with the wireless communication device, **characterized in that**:
the controller (210) is configured to determine a downlink resource on which the wireless communication device may receive a response to the message sent on the uplink resource,
the downlink resource is determined by applying an offset to a predetermined downlink resource,
the offset is based on the information associated with the wireless communication device.

7. The device of Claim 6, wherein the controller (210) is configured to determine the offset as a function of the information associated with the wireless communication device.

8. The device of Claim 7, wherein the information associated with the wireless communication device is a cell radio network temporary identification.

9. The device of Claim 6, wherein the uplink resource is a contention based uplink resource on which other wireless communication devices may also transmit uplink messages.

10. The device of Claim 6 wherein
the uplink resource is a contention based uplink resource on which other wireless communication devices may also transmit uplink messages,
the message is a TCP acknowledgement.

11. The device of Claim 6, wherein the offset is in a domain selected from a group comprising a time domain, a frequency domain, or a code domain.

12. A method for a wireless communication infrastructure entity, the method comprising:
receiving (320) a message including information associated with a wireless communication device that originated the message; the method **characterized by**:
determining (330) a downlink resource on which a response to the message will be sent, the downlink resource is determined by applying an offset to a predetermined downlink resource,
the offset being based on the information associated with the wireless communication device that originated the message;
transmitting (340) a response on the downlink resource; and
the message being received on a contention based uplink resource, the contention based uplink resource available to more than one wireless communication device for uplink transmissions.

13. The method of Claim 12, determining the offset as a function of the information associated with the wireless communication device that originated the message, the information associated with the wireless communication device is a cell radio network temporary identification.

14. The method of Claim 12 further comprising
granting the contention based uplink resource to multiple wireless communication devices before receiving the message,
receiving the message on the contention based uplink resource without first scheduling transmission of the message,
transmitting the response on the downlink resource includes acknowledging receipt of the message received on the contention based uplink resource.

15. The method of Claim 12 further comprising receiving the message includes receiving a TCP acknowledgement, transmitting the response includes acknowledging receipt of the TCP acknowledgement.

16. The method of Claim 12, wherein the offset is in a domain selected from a group comprising a time domain, a frequency domain, or a code domain.

17. A wireless communication infrastructure entity comprising:
a transceiver (214);
a controller (210) coupled to the transceiver,
the controller (210) being configured to cause the receiver to receive a message including information associated with a wireless communication device that originated the message, **characterized in that**:
the transceiver (214) receives the message on a contention based uplink resource, the contention based uplink resource being available to more than one wireless communication device for uplink transmissions;
the controller (210) is configured to determine a downlink resource on which a response to the message may be sent, the downlink resource is determined by applying an offset to a predetermined downlink resource, and
the offset is based on the information associated with the wireless communication device that originated the message.

18. The device of Claim 17, the controller (210) configured to determine the offset as a function of the information associated with the wireless communication device that originated the message, the information is a cell radio network temporary identification.

19. The device of Claim 17,
the controller (210) configured to cause the transceiver (214) to transmit a grant to the contention based uplink resource to multiple wireless communication devices before receiving the message,
the response is an acknowledgment of receipt of the message on the contention based uplink resource.

20. The device of Claim 17 further comprising
the message is a TCP acknowledgement,
the response is acknowledgment of receipt of the TCP acknowledgement.

21. The device of Claim 17, wherein the offset is in a domain selected from a group comprising a time domain, a frequency domain, or a code domain.

## Patentansprüche

1. Verfahren für eine drahtlose Kommunikationsvorrichtung, wobei das Verfahren Folgendes umfasst:
Übertragung, von der drahtlosen Kommunikationsvorrichtung, einer Uplink-Meldung, umfassend Information, die mit der drahtlosen Kommunikationsvorrichtung assoziiert ist; **gekennzeichnet durch**:
Bestimmung einer Downlink-Ressource (430), auf der die drahtlose Kommunikationsvorrichtung eine Antwort auf die Uplink-Meldung erhalten kann, wobei die Downlink-Ressource **durch** die Anwendung einer Versetzung auf eine vorbestimmte Downlink-Quelle bestimmt ist,
wobei die Versetzung auf der Information basiert, die mit der drahtlosen Kommunikationsvorrichtung assoziiert ist; und
Erhalt (440), an der drahtlosen Kommunikationsvorrichtung, einer Antwort auf die Uplink-Meldung auf der Downlink-Ressource.

2. Verfahren nach Anspruch 1, weiter umfassend Bestimmung der Versetzung als eine Funktion der Information, die mit der drahtlosen Kommunikationsvorrichtung assoziiert ist, wobei die Information ein Identifizierer der entfernten Einheit ist.

3. Verfahren nach Anspruch 1, weiter umfassend die Bestimmung der Versetzung als eine Funktion der Information, die mit der drahtlosen Kommunikationsvorrichtung assoziiert ist, wobei die Information die vorübergehende Kennung eines Zellenfunknetzwerks ist.

4. Verfahren nach Anspruch 1, weiter umfassend:
Erhalt einer konfliktbasierten Uplink-Ressourcenverteilung,
wobei die Uplink-Meldung unter Verwendung der konfliktbasierten Uplink-Ressource übertragen wird,
wobei die erhaltene Antwort den Erhalt der Uplink-Meldung bestätigt.

5. Verfahren nach Anspruch 1, weiter umfassend:
Erhalt einer konfliktbasierten Uplink-Ressourcenverteilung,
wobei die Übertragung der Uplink-Meldung die Übertragung einer TCP-Bestätigung auf der konfliktbasierten Uplink-Ressource umfasst,
wobei die Antwort auf die Uplink-Meldung, die auf der Downlink-Ressource erhalten wird, den Erhalt der Uplink-Meldung bestätigt.

6. Drahtlose Kommunikationvorrichtung, umfassend:
einen Transceiver (214);
eine Steuerungseinheit (210), die mit dem Transceiver gekoppelt ist,
wobei die Steuerungseinheit (210) konfiguriert ist, um zu verursachen, dass der Transceiver (214) eine Meldung auf einer Uplink-Ressource überträgt, wobei die Meldung die Information umfasst, die mit der drahtlosen Kommunikationsvorrichtung assoziiert ist, **dadurch gekennzeichnet, dass**:
die Steuerungseinheit (210) konfiguriert ist, um eine Downlink-Ressource zu bestimmen, auf der die drahtlose Kommunikationsvorrichtung eine Antwort auf die Meldung erhalten kann, die auf der Uplink-Ressource geschickt wurde,
wobei die Downlink-Ressource durch die Anwendung einer Versetzung auf eine vorbestimmte Downlink-Ressource bestimmt ist,
wobei die Versetzung auf der Information basiert, die mit der drahtlosen Kommunikationsvorrichtung assoziiert ist.

7. Vorrichtung nach Anspruch 6, wobei die Steuerungseinheit (210) konfiguriert ist, um die Versetzung als eine Funktion der Information zu bestimmen, die mit der drahtlosen Kommunikationsvorrichtung assoziiert ist.

8. Vorrichtung nach Anspruch 7, wobei die Information, die mit der drahtlosen Kommunikationsvorrichtung assoziiert ist, eine vorübergehende Kennung eines Zellenfunknetzwerks ist.

9. Vorrichtung nach Anspruch 6, wobei die Uplink-Ressource eine konfliktbasierte Uplink-Ressource ist, auf der andere drahtlose Kommunikationsvorrichtungen ebenfalls Uplink-Meldungen übertragen können.

10. Vorrichtung nach Anspruch 6, wobei
die Uplink-Ressource eine konfliktbasierte Uplink-Ressource ist, auf der andere drahtlose Kommunikationsvorrichtungen ebenfalls Uplink-Meldungen übertragen können,
die Meldung eine TCP-Bestätigung ist.

11. Vorrichtung nach Anspruch 6, wobei die Versetzung in einer Domäne liegt, ausgewählt aus einer Gruppe, umfassend eine Zeitdomäne, eine Frequenzdomäne oder eine Codedomäne.

12. Verfahren für eine drahtlose Kommunikationsvorrichtungs-Infrastruktureinheit, wobei das Verfahren Folgendes umfasst:
Erhalt (320) einer Meldung, die Information umfasst, die mit einer drahtlosen Kommunikationsvorrichtung assoziiert ist, aus der die Meldung stammt; wobei das Verfahren **gekennzeichnet ist durch**:
Bestimmung (330) einer Downlink-Ressource, auf der eine Antwort an die Meldung geschickt wird, wobei die Downlink-Ressource **durch** die Anwendung einer Versetzung auf eine vorbestimmte Downlink-Ressource bestimmt ist,
wobei die Versetzung auf der Informationen basiert, die mit der drahtlosen Kommunikationsvorrichtung assoziiert ist, aus der die Meldung stammt;
Übertragung (340) einer Antwort auf die Downlink-Ressource; und
wobei die Meldung auf einer konfliktbasierten Uplink-Ressourcenverteilung erhalten wird, wobei die konfliktbasierte Uplink-Ressourcenverteilung für mehr als eine drahtlose Kommunikationsvorrichtung für Uplink-Übertragungen zur Verfügung steht.

13. Verfahren nach Anspruch 12, das die Versetzung als eine Funktion der Information bestimmt, die mit der drahtlosen Kommunikationsvorrichtung assoziiert ist, aus der die Meldung stammt; wobei die Information, die mit der drahtlosen Kommunikationsvorrichtung assoziiert ist, eine vorübergehende Kennung eines Zellenfunknetzwerks ist.

14. Verfahren nach Anspruch 12, weiter umfassend:
Verteilung der konfliktbasierten Uplink-Ressource an zahlreiche drahtlose Kommunikationsvorrichtungen vor dem Erhalt der Meldung,
Erhalt der Meldung auf der konfliktbasierten Uplink-Ressource ohne zuerst die Übertragung der Meldung zu planen,
wobei die Übertragung der Antwort auf der Downlink-Ressource die Bestätigung des Erhalts der Meldung umfasst, die auf der konfliktbasierten Uplink-Ressource erhalten wird.

15. Verfahren nach Anspruch 12, weiter umfassend:
Erhalt der Meldung, die den Erhalt einer TCP-Bestätigung umfasst,
Übertragung der Antwort, die die Bestätigung des Erhalts der TCP-Bestätigung umfasst.

16. Verfahren nach Anspruch 12, wobei die Versetzung in einer Domäne liegt, ausgewählt aus einer Gruppe, umfassend eine Zeitdomäne, eine Frequenzdomäne oder eine Codedomäne.

17. Drahtlose Kommunikations-Infrastruktureinheit, umfassend:
einen Transceiver (214);
eine Steuerungseinheit (210), die mit dem Transceiver gekoppelt ist,
wobei die Steuerungseinheit (210) konfiguriert ist, um zu verursachen, dass der Empfänger eine Meldung erhält, darin eingeschlossen Information, die mit einer drahtlosen Kommunikationsvorrichtung assoziiert ist, aus der die Meldung stammt, **dadurch gekennzeichnet, dass**:
der Transceiver (214) die Meldung auf einer konfliktbasierten Uplink-Ressource erhält, wobei die konfliktbasierte Uplink-Ressource für mehr als eine drahtlose Kommunikationsvorrichtung für Uplink-Übertragungen zur Verfügung steht;
die Steuerungseinheit (210) konfiguriert ist, um eine Downlink-Ressource zu bestimmen, auf der eine Antwort auf die Meldung geschickt werden kann, wobei die Downlink-Ressource durch die Anwendung einer Versetzung auf eine vorbestimmte Downlink-Ressource bestimmt ist,
wobei die Versetzung auf der Information basiert, die mit der drahtlosen Kommunikationsvorrichtung assoziiert ist, aus der die Meldung stammt;

18. Vorrichtung nach Anspruch 17, wobei die Steuerungseinheit (210) konfiguriert ist, um die Versetzung als eine Funktion der Information zu bestimmen, die mit der drahtlosen Kommunikationsvorrichtung assoziiert ist, von der die Meldung stammt, wobei die Information die vorübergehende Kennung eines Zellenfunknetzwerks ist.

19. Vorrichtung nach Anspruch 17, wobei
die Steuerungseinheit (210) konfiguriert ist, um zu verursachen, dass der Transceiver (214) eine Verteilung an die konfliktbasierte Uplink-Ressource an zahlreiche drahtlose Kommunikationsvorrichtungen vor dem Erhalt der Meldung überträgt,
wobei die Antwort eine Bestätigung des Erhalts der Meldung auf der konfliktbasierten Uplink-Ressource ist.

20. Verfahren nach Anspruch 17, weiter umfassend
die Meldung ist eine TCP-Bestätigung
die Antwort ist eine Bestätigung des Erhalts der TCP-Bestätigung.

21. Vorrichtung nach Anspruch 17, wobei die Versetzung in einer Domäne liegt, ausgewählt aus einer Gruppe, umfassend eine Zeitdomäne, eine Frequenzdomäne oder eine Codedomäne.

## Revendications

1. Procédé pour un dispositif de communication sans fil, le procédé comprenant :
l'émission, à partir du dispositif de communication sans fil, d'un message de liaison montante comprenant des informations associées au dispositif de communication sans fil ; **caractérisé par** :
la détermination d'une ressource de liaison descendante (430) sur laquelle le dispositif de communication sans fil peut recevoir une réponse au message de liaison montante, la ressource de liaison descendante étant déterminée par application d'un décalage à une ressource de liaison descendante prédéterminée,
le décalage étant basé sur les informations associées au dispositif de communication sans fil ; et
la réception (440), au dispositif de communication sans fil, d'une réponse au message de liaison montante sur la ressource de liaison descendante.

2. Procédé selon la revendication 1, comprenant en outre la détermination du décalage en fonction des informations associées au dispositif de communication sans fil, les informations étant un identificateur d'unité distante.

3. Procédé selon la revendication 1, comprenant en outre la détermination du décalage en fonction des informations associées au dispositif de communication sans fil, les informations étant une identification temporaire de réseau cellulaire radio.

4. Procédé selon la revendication 1, comprenant en outre :
la réception d'une attribution de ressource de liaison montante basée sur une contention,
le message de liaison montante étant émis en utilisant la ressource de liaison montante basée sur une contention,
la réponse reçue acquittant la réception du message de liaison montante.

5. Procédé selon la revendication 1, comprenant en outre :
la réception d'une attribution de ressource de liaison montante basée sur une contention,
l'émission du message de liaison montante comprenant l'émission d'un acquittement TCP sur la ressource de liaison montante basée sur une contention,
la réponse au message de liaison montante reçu sur la ressource de liaison descendante acquittant la réception du message de liaison montante.

6. Dispositif de communication sans fil comprenant :
un émetteur-récepteur (214) ;
un contrôleur (210) couplé à l'émetteur-récepteur,
le contrôleur (210) étant configuré pour amener l'émetteur-récepteur (214) à émettre un message sur une ressource de liaison montante, le message comprenant des informations associées au dispositif de communication sans fil, **caractérisé par le fait que** :
le contrôleur (210) est configuré pour déterminer une ressource de liaison descendante sur laquelle le dispositif de communication sans fil peut recevoir une réponse au message envoyé sur la ressource de liaison montante,
la ressource de liaison descendante est déterminée par application d'un décalage à une ressource de liaison descendante prédéterminée,
le décalage est basé sur les informations associées au dispositif de communication sans fil.

7. Dispositif selon la revendication 6, dans lequel le contrôleur (210) est configuré pour déterminer le décalage en fonction des informations associées au dispositif de communication sans fil.

8. Dispositif selon la revendication 7, dans lequel les informations associées au dispositif de communication sans fil sont une identification temporaire de réseau cellulaire radio.

9. Dispositif selon la revendication 6, dans lequel la ressource de liaison montante est une ressource de liaison montante basée sur une contention sur laquelle d'autres dispositifs de communication sans fil peuvent également émettre des messages de liaison montante.

10. Dispositif selon la revendication 6, dans lequel :
la ressource de liaison montante est une ressource de liaison montante basée sur une contention sur laquelle d'autres dispositifs de communication sans fil peuvent également émettre des messages de liaison montante,
le message est un acquittement TCP.

11. Dispositif selon la revendication 6, dans lequel le décalage est dans un domaine choisi parmi un groupe comprenant un domaine temporel, un domaine fréquentiel, ou un domaine de code.

12. Procédé pour une entité d'infrastructure de communication sans fil, le procédé comprenant :
la réception (320) d'un message comprenant des informations associées à un dispositif de communication sans fil dont est issu le message ; le procédé étant **caractérisé par** :
la détermination (330) d'une ressource de liaison descendante sur laquelle une réponse au message sera envoyée, la ressource de liaison descendante étant déterminée par application d'un décalage à une ressource de liaison descendante prédéterminée,
le décalage étant basé sur les informations associées au dispositif de communication sans fil dont est issu le message ;
l'émission (340) d'une réponse sur la ressource de liaison descendante ; et
le message étant reçu sur une ressource de liaison montante basée sur une contention, la ressource de liaison montante basée sur une contention étant disponible pour plus d'un dispositif de communication sans fil pour des émissions de liaison montante.

13. Procédé selon la revendication 12, déterminant le décalage en fonction des informations associées au dispositif de communication sans fil dont est issu le message, les informations associées au dispositif de communication sans fil étant une identification temporaire de réseau cellulaire radio.

14. Procédé selon la revendication 12, comprenant en outre :
l'attribution de la ressource de liaison montante basée sur une contention pour de multiples dispositifs de communication sans fil avant la réception du message,
la réception du message sur la ressource de liaison montante basée sur une contention sans la planification en premier de l'émission du message,
l'émission de la réponse sur la ressource de liaison descendante comprenant un récépissé d'acquittement du message reçu sur la ressource de liaison montante basée sur une contention.

15. Procédé selon la revendication 12, comprenant en outre :
la réception du message comprenant un acquittement TCP,
l'émission de la réponse comprenant l'acquittement de réception de l'acquittement TCP.

16. Procédé selon la revendication 12, dans lequel le décalage est dans un domaine choisi parmi un groupe comprenant un domaine temporel, un domaine fréquentiel, ou un domaine de code.

17. Entité d'infrastructure de communication sans fil comprenant :
un émetteur-récepteur (214) ;
un contrôleur (210) couplé à l'émetteur-récepteur,
le contrôleur (210) étant configuré pour amener le récepteur à recevoir un message comprenant des informations associées à un dispositif de communication sans fil dont est issu le message, **caractérisée par le fait que** :
l'émetteur-récepteur (214) reçoit le message sur une ressource de liaison montante basée sur une contention, la ressource de liaison montante basée sur une contention étant disponible pour plus d'un dispositif de communication sans fil pour des transmissions de liaison montante ;
le contrôleur (210) est configuré pour déterminer une ressource de liaison descendante sur laquelle une réponse au message peut être envoyée, la ressource de liaison descendante étant déterminée par application d'un décalage d'une ressource de liaison descendante prédéterminée, et
le décalage est basé sur les informations associées au dispositif de communication sans fil dont est issu le message.

18. Dispositif selon la revendication 17, le contrôleur (210) étant configuré pour déterminer le décalage en fonction des informations associées au dispositif de communication sans fil dont est issu le message, les informations étant une identification temporaire de réseau cellulaire radio.

19. Dispositif selon la revendication 17, le contrôleur (210) étant configuré pour amener l'émetteur-récepteur (214) à émettre une attribution à la ressource de liaison montante basée sur une contention vers de multiples dispositifs de communication sans fil avant la réception du message,
la réponse étant un acquittement de réception du message sur la ressource de liaison montante basée sur une contention.

20. Dispositif selon la revendication 17, comprenant en outre :
le message qui est un acquittement TCP,
la réponse qui est un acquittement de réception de l'acquittement TCP.

21. Dispositif selon la revendication 17, dans lequel le décalage est dans un domaine choisi parmi un groupe comprenant un domaine temporel, un domaine fréquentiel, ou un domaine de code.
